# EUROPÄISCHE PATENTSCHRIFT

(11) **EP 3 682 190 B1**
(45) Veröffentlichungstag und Bekanntmachung des Hinweises auf die Patenterteilung: **05.04.2023**
(21) Anmeldenummer: 18773932.1
(22) Anmeldetag: 13.09.2018
(51) Int. Cl.: G01B 21/26, G01B 5/255, B62D 65/18

(54) **PRODUKTIONSSTRASSE FÜR EIN KRAFTFAHRZEUG**
PRODUCTION LINE FOR A MOTOR VEHICLE
LIGNE DE PRODUCTION POUR UN VÉHICULE AUTOMOBILE

(30) Priorität: 13.09.2017 DE 102017121220
(43) Veröffentlichungstag der Anmeldung: 22.07.2020
(73) Patentinhaber: Dürr Assembly Products GmbH, 66346 Püttlingen (DE)
(72) Erfinder: HEIDUCZEK, Gerhard, 66292 Riegelsberg (DE); BAUER, Alexander, 66557 Illingen (DE); KURT, Ismail, 66333 Völklingen (DE)
(74) Vertreter: Patentanwaltskanzlei Vièl & Wieske PartGmbB
(86) Internationale Anmeldenummer: PCT/DE2018/100778
(87) Internationale Veröffentlichungsnummer: WO 2019/052606

(56) Entgegenhaltungen:
- DE-A1- 19 636 427
- DE-A1-102005 053 370
- DE-A1-102013 114 579

## Beschreibung

Die vorliegende Erfindung betrifft eine Produktionsstraße für ein Kraftfahrzeug nach dem Oberbegriff des Anspruchs 1.

Die Parameter der Fahrwerkgeometrie betreffen die Einstellung der Spur- und Sturzwinkel der Räder der Hinterachse. Es ist bekannt, die Messung und Einstellung dieser Winkel bei einer montierten Hinterachse am (zumindest weitgehend) fertig montierten Fahrzeug vorzunehmen. Bei dieser Vorgehensweise weist die Hinterachse die Gewichtsbelastung auf, die sich auch im folgenden Fahrbetrieb durch das Gewicht des Fahrzeugs ergibt.

Es ist ebenso bekannt, im laufenden Produktionsprozess die (nicht montierte) Hinterachse zu greifen und zu lagern und weiterhin Belastungsmittel vorzusehen, mit denen eine Gewichtsbelastung des Fahrzeugs auf die Hinterachse simuliert wird. Hierbei erweist es sich als vorteilhaft, dass die Einstellung der Parameter der Fahrwerkgeometrie bereits vor der Montage der Hinterachse an das Fahrzeug erfolgen kann. Diese Belastungsmittel sind als Federlasteinheiten aufgebaut, die an den Punkten an der Achse über Federn Gewichtskräfte simulieren, an denen bei einer montierten Achse die Federmittel des Fahrzeugs angreifen. Dies gilt für konventionelle mechanische Federn sowie auch für pneumatische Federsysteme von Fahrzeugen. Vorteilhaft wirken die Federlastmittel mit der Wirkrichtung der Hinterachse so zusammen, wie dies auch bei einer an einem Fahrzeug montierten Hinterachse der Fall ist.

Es ist bekannt, die Orientierung der Radebene mittels optischer Messmittel zu messen. Hierbei kann ein erforderlicher Korrekturwert der Einstellung der Parameter der Fahrwerkgeometrie ermittelt werden, der als Korrekturwert für die Betätigung von Einstellwerkzeugen zur Betätigung der Einstellmittel der Hinterachse für die

Einstellung der Parameter der Fahrwerkgeometrie angezeigt werden kann. Ebenso kann der Korrekturwert bei einer automatisierten Einstellung den automatisiert betriebenen Einstellwerkzeugen zugeführt werden.

Es ist auch bekannt (DE 10 2013 114 579 A1), als Einstellwerkzeuge für die Parameter der Fahrwerkgeometrie Greif- und Haltemittel vorzusehen, die die Hinterachse an der Radnabe und/oder den Bremsscheiben und/oder einer ggf. vorhandenen Adapterscheibe greifen und halten. Diese Greif- und Haltemittel sind gegenüber der Lagerung der Greif- und Haltemittel derart definiert einstellbar, dass über diese definierte Einstellung der Greif- und Haltemittel die Orientierung der Radnabe, der Bremsscheibe und/oder der Adapterscheibe so einstellbar ist, dass diese Orientierung den einzustellenden Parametern der Fahrwerkgeometrie entspricht. Bei dieser Einstellung sind die Feststellmittel an der Hinterachse für die Einstellung der Parameter der Fahrwerkgeometrie gelöst. Nachdem die Einstellung der Parameter der Fahrwerkgeometrie erfolgt ist, werden diese Feststellmittel wieder angezogen. Bei dieser Ausgestaltung sind die Greif- und Haltemittel zugleich die Einstellwerkzeuge für die Parameter der Fahrwerkgeometrie sowie auch die Messmittel für die Parameter der Fahrwerkgeometrie. Aus einer bestimmten Orientierung der Greif- und Haltemittel lassen sich unmittelbar die Parameter der Fahrwerkgeometrie der Hinterachse entnehmen.

Bei einer weiteren bekannten Lösung (DE 10 2005 053 370 A1) sind mehrere Positionen vorhanden, an denen die Hinterachsen mittels eines Roboters mit einem Greifarm aus der Produktionsstraße herausgehoben und jeweils auf einem Rahmen abgelegt werden. Diese Rahmen sind entlang der Produktionsstraße aufgestellt. Jeder dieser Rahmen ist an einen bestimmten Typ einer Hinterachse angepasst. Verschiedene Fahrzeugtypen haben verschiedene Hinterachsen. Wenn in einer Produktionsstraße nicht lediglich ein einziger Fahrzeugtyp hergestellt wird, sondern mehrere, müssen deswegen auch verschiedene Typen von Hinterachsen bearbeitet werden. Nach Ablage in dem jeweiligen Rahmen werden die Einstellarbeiten an der Hinterachse durchgeführt. Daran anschließend werden die Hinterachsen wieder mittels des Roboters in die Produktionsstraße zurückgehoben.

Diese Lösung bedingt, dass die Produktionsstraße entsprechend lang sein muss, damit die einzelnen Rahmen hintereinander (bezogen auf die Förderrichtung der Hinterachsen entlang der Produktionsstraße) angeordnet werden können. Neben dem damit verbundenen Platzbedarf für die Produktionsstraße vergrößern sich dadurch auch die Taktzeiten im laufenden Produktionsprozess. Dies ist zum einen dadurch bedingt, dass jede Hinterachse entlang der Produktionsstraße auch an allen den Rahmen vorbei gefördert werden muss, die für andere Typen von Hinterachsen ausgelegt sind. Außerdem muss in der Fördereinrichtung zwischen den einzelnen Hinterachsen, die im Produktionsprozess gefördert werden, immer wieder Zwischenabstände eingehalten werden, in die von den Robotern Hinterachsen eingelegt werden können, wenn die Einstellarbeiten an diesen Hinterachsen in den Rahmen abgeschlossen sind und diese Hinterachsen wieder in den laufenden Produktionsprozess eingeschleust werden sollen.

Bei der vorliegenden Erfindung ist die Produktionsstraße für ein Kraftfahrzeug so ausgestaltet, dass die Vermessung und Einstellung der Paramater der Fahrwerkgeometrie an einer Hinterachse des Kraftfahrzeugs in die Produktionsstraße für das Kraftfahrzeug integriert ist. Der Produktionsstraße sind Lagerungsmittel für die Hinterachse zugeordnet, Belastungsmittel für die Hinterachse, Messmittel für die Parameter der Fahrwerkgeometrie sowie Einstellwerkzeuge für die Einstellung der Parameter der Fahrwerkgeometrie.

Die Lagerungsmittel können aus Radnabengreifeinheiten bestehen. Zusätzlich können als Bestandteil der Lagerungsmittel noch Achsspanner vorgesehen sein, mit denen der Achskörper fixiert wird.

Es geht bei den Belastungsmitteln um die definierte Belastung der Hinterachse zur Simulation von deren Gewichtsbelastung im eingebauten Zustand. Dies wurde vorstehend bereits erläutert.

Der vorliegenden Erfindung liegt die Aufgabe zu Grunde, in einer Produktionsstraße Achsen unterschiedlicher Fahrzeuge einstellen zu können.

Diese Aufgabe wird nach der vorliegenden Erfindung gelöst, indem die Produktionsstraße mehrere Wechselrahmen aufweist sowie weiterhin Positioniermittel zur Positionierung eines der Wechselrahmen in eine Position zum Greifen der Hinterachse im Produktionsprozess.

Die Lagerungsmittel für die Hinterachse und / oder die Belastungsmittel für die Hinterachse und /oder die Messmittel für die Parameter der Fahrwerkgeometrie und / oder die Einstellwerkzeuge für die Einstellung der Parameter der Fahrwerkgeometrie sind zumindest teilweise Bestandteil des jeweiligen Wechselrahmens.

Diese Einbringung der Wechselrahmen in die Produktionsstraße erweist sich als vorteilhaft.

Bisher war es erforderlich, in der Produktionsstraße Lagerungsmittel, Belastungsmittel; Messmittel und Einstellwerkzeuge vorzusehen, mit denen alle Hinterachsen in der Produktionsstraße gehandhabt werden können, die bei der Produktion verschiedener Fahrzeugtypen vorkommen können. Abhängig von den unterschiedlichen Hinterachsen und insbesondere von deren unterschiedlicher Gestaltung war es dabei notwendig, die die genannten Lagerungsmittel, Belastungsmittel, Messmittel und Einstellwerkzeuge in der Produktionsstraße flexibel zu gestalten.

Mit der vorliegenden Erfindung wird es möglich, konstruktive Schnittstellen für die Handhabung der Hinterachsen verschiedener Fahrzeugtypen zumindest teilweise in die jeweiligen Wechselrahmen zu integrieren. Die einzelnen Wechselrahmen haben wiederum standardisierte Schnittstellen zu der Produktionsstraße für das Kraftfahrzeug. Die konstruktiven Anforderungen zur Anpassung der Lagerungsmittel, Belastungsmittel, Messmittel sowie der Einstellwerkzeuge an die einzelnen Hinterachsen der verschiedenen Fahrzeugtypen werden dabei vorteilhaft zumindest teilweise in die Wechselrahmen verlagert.

Soweit die Lagerungsmittel, Belastungsmittel, Messmittel und / oder die Einstellwerkzeuge den Wechselrahmen zugeordnet sind, sind diese damit bei der vorliegenden Erfindung mittelbar auch der Produktionsstraße zugeordnet, weil der Wechselrahmen wiederum der Produktionsstraße zugeordnet ist.

Die Produktionsstraße bleibt dabei flexibel hinsichtlich der Möglichkeit, auch Hinterachsen verschiedener Fahrzeugtypen unmittelbar aufeinander folgend in der Produktionsstraße fertigen zu können.

Dies wird realisiert durch die Positioniermittel. Dadurch wird es möglich, in der Produktionsstraße gerade den passenden Wechselrahmen in die Produktionsstraße zu bringen der im Produktionsprozess folgenden Hinterachse.

Die Lagerungsmittel können beispielsweise lediglich teilweise Bestandteil des Wechselrahmens sein, wenn die Lagerungsmittel aus einer Radnabengreifeinheit bestehen sowie einem Achsspanner. Mit dem Achsspanner erfolgt eine Fixierung der Achskörpers. Die Radnabengreifeinheiten können der Produktionsstraße direkt zugeordnet sein. Dies erweist sich insofern als sinnvoll, weil nur geringer konstruktiver Aufwand betrieben werden muss, um die Radnabengreifeinheit so auszubilden, dass damit unterschiedliche Typen von Hinterachsen gegriffen und über die Radnabengreifeinheit gelagert werden können. Insofern erweist es sich als sinnvoll, diese Radnabengreifeinheit der Produktionsstraße direkt zuzuordnen. Die Angriffspunkte der Achsspanner weisen bei den unterschiedlichen Typen von Hinterachsen mehr oder weniger starke Variationen in der x- und y-Richtung auf (x-Richtung: in "Fahrtrichtung" der eingebauten Achse; y-Richtung: in Längsrichtung der Achse). Daher kann es sinnvoll sein, diese Achsspanner dem Wechselrahmen zuzuordnen. Damit kann der Achsspanner in dem jeweiligen Wechselrahmen auf den Hinterachstyp konstruiert und optimiert werden, der für die jeweilige Hinterachse vorgesehen ist. Bei dieser Lösung sind damit die Lagerungsmittel lediglich teilweise (nämlich nur der Achsspanner) Bestandteil des Wechselrahmens. Es ist dabei ersichtlich, dass auch die Radnabengreifeinheit Bestandteil des Wechselrahmens sein können. In diesem Fall sind die Lagerungsmittel vollständig Bestandteil des Wechselrahmens.

Entsprechendes gilt auch für die Belastungsmittel, die Messmittel und / oder die Einstellwerkzeuge. Auch diese können ganz oder teilweise - soweit diese aus mehreren zusammenwirkenden Komponenten bestehen, Bestandteil des Wechselrahmens sein.

Insbesondere ergibt sich gegenüber der Lösung nach der DE 10 2005 053 370 A1 ein geringerer Platzbedarf der gesamten Anlage in der Produktion, weil die Wechselrahmen so positioniert werden, dass die Hinterachsen (insbesondere auch die unterschiedlichen Typen von Hinterachsen) jeweils an demselben Ort in der Produktionsstraße eingestellt werden können. Da die Hinterachsen damit nicht mehr entlang der Produktionsstraße gefördert werden müssen, ohne dass Einstellarbeiten vorgenommen werden, werden auch die Taktzeiten verkürzt. Ein weiterer Unterschied besteht darin, dass bei der DE 10 2005 053 370 A1 die Hinterachse mittels eines Roboterarms gegriffen und aus der Produktionsstraße herausgehoben wird. Diese Hinterachse wird auf dem jeweils passenden Rahmen neben der Produktionsstraße abgelegt. Während bei diesem genannten Stand der Technik die Hinterachse zu dem Rahmen gehoben wird, wird bei der vorliegenden Erfindung der Wechselrahmen in der Produktionsstraße derart bewegt, dass der jeweilige Hinterachstyp bearbeitet werden kann.

Bei der Ausgestaltung nach Anspruch 2 weist der jeweilige Wechselrahmen Einstellwerkzeuge auf zur Einstellung der Parameter der Fahrwerkgeometrie der Hinterachse.

Bei unterschiedlichen Angriffspunkten und / oder unterschiedlichen Einstellwerkzeugen zur Betätigung von Einstellmitteln für die Parameter der Fahrwerkgeometrie bei unterschiedlichen Typen von Hinterachsen lassen sich diese konstruktiven Anforderungen in dem jeweiligen Wechselrahmen umsetzen.

Dies kann erfolgen, indem der Antrieb der Einstellwerkzeuge, mit denen die Einstellmittel an der Hinterachse betätigt werden, ebenfalls in den Wechselrahmen integriert ist.

Alternativ kann dies auch erfolgen, indem die Wechselrahmen standardisierte Angriffspunkte und Angriffselemente aufweisen, durch die die Einstellwerkzeuge der jeweiligen Wechselrahmen von außen betätigbar sind. Bei dieser Ausgestaltung können in der Produktionsstraße Angriffselemente integriert sein, über die die Einstellwerkzeuge der jeweiligen Wechselrahmen betätigbar sind. Der Wechselrahmen ist wiederum so konstruiert, dass mittels der Einstellwerkzeuge des Wechselrahmens die Einstellmittel der Parameter der Fahrwerkgeometrie an der jeweiligen Hinterachse betätigbar sind.

Bei der Ausgestaltung nach Anspruch 3 weist der jeweilige Wechselrahmen Einstellwerkzeuge auf, die mittels Stellelementen betätigbar sind, die von außen auf den Wechselrahmen einwirken.

Wie bereits erläutert sind diese Stellelemente Bestandteil der Produktionsstraße. Der Konstruktionsaufwand dieser Stellelemente beschränkt sich darauf, dass diese Stellelemente an den standardisierten Schnittstellen der Wechselrahmen angreifen müssen. Damit müssen diese Stellelemente weniger flexibel sein, als wenn mit diesen Stellelementen unmittelbar die Einstellmittel verschiedener Typen von Hinterachsen betätigbar sein müssten.

Bei der Ausgestaltung nach Anspruch 4 ist eine Datenempfangseinheit Bestandteil des Wechselrahmens, über die dem Wechselrahmen Informationen über die einzustellenden Paramater der Fahrwerkgeometrie übermittelbar sind.

Diese Datenübermittlung kann kabelgebunden erfolgen oder auch drahtlos.

Die Ausgestaltung nach Anspruch 4 erweist sich als vorteilhaft, wenn der jeweilige Wechselrahmen eine eigene Antriebseinheit zum Antrieb der Einstellwerkzeuge zur Betätigung der Einstellmittel der Parameter der Fahrwerkgeometrie aufweist. Eine solche Ausgestaltung bedeutet, dass die Schnittstellen des Wechselrahmens zur Produktionsstraße einfach ausgestaltet werden können. Allerdings müssen bei dieser Lösung mehr konstruktive Anteile in dem Wechselrahmen umgesetzt werden.

Bei der Ausgestaltung nach Anspruch 5 weist der Wechselrahmen Lagerungsmittel für die Hinterachse auf, mit denen die Hinterachse an den Radnaben und/oder den Bremsscheiben und/oder einer Adapterscheibe greifbar ist, wobei die Lagerungsmittel Stellelemente aufweisen, mit denen die Orientierung der Radnabe und/ oder der Bremsscheibe und/oder der Adapterscheibe entsprechend den Parametern der Fahrwerkgeometrie einstellbar ist durch eine entsprechende Einstellung der Orientierung Lagerungsmittel bei gelösten Feststellmitteln der Einstellung der Parameter der Fahrwerkgeometrie an der Hinterachse.

Diese Ausgestaltung erweist sich insofern als vorteilhaft, als dass dabei keine separaten optischen Messmittel vorhanden sein müssen zur optischen Vermessung der Parameter der Fahrwerkgeometrie. Durch die definierte Einstellung der Orientierung der Lagerungsmittel relativ zu deren Lagerung wird es möglich, die Radebene der Räder der Hinterachse entsprechend den Sollwerten der Parameter der Fahrwerkgeometrie einzustellen. Insofern stellen bei dieser Ausgestaltung die Lagerungsmittel zugleich auch die Messmittel dar.

Damit die Radnabe, die Bremsscheibe und/oder die Adapterscheibe der Einstellung der Orientierung der Greif- und Haltemittel folgen können, erfolgt die Einstellung der Orientierung der Lagerungsmittel bei gelösten Feststellmitteln der Einstellung der Parameter der Fahrwerkgeometrie. Wenn die Einstellung der Parameter der Fahrwerkgeometrie beendet ist, werden die Feststellmittel wieder angezogen und die Einstellung damit fixiert.

Die Stellelemente für die Lagerungsmittel können in den jeweiligen Wechselrahmen integriert sein. Ebenso ist es möglich, dass an dem jeweiligen Wechselrahmen Angriffselemente an definierten Angriffspunkten des Wechselrahmens vorhanden sind. Es ist dann möglich, die Einstellung der Parameter der Fahrwerkgeometrie vorzunehmen, indem von außen an diesen Angriffspunkten angegriffen wird und dadurch die Einstellung der Orientierung der Lagerungsmittel vorgenommen wird.

Bei der Ausgestaltung nach Anspruch 6 weist die Produktionsstraße Führungsmittel auf zur geführten Bewegung der Wechselrahmen in der horizontalen Ebene in einer Richtung senkrecht zur Bewegungsrichtung der Förderung der Hinterachse in der Produktionsstraße.

Dies erweist sich insofern als vorteilhaft, weil dabei die Wechselrahmen in einfacher Weise zugeführt werden können.

Bei der Ausgestaltung der Vorrichtung nach Anspruch 7 weist der Wechselrahmen weiterhin Messmittel auf zur Messung der Montagelage eines Hinterachsdifferentials.

Dies erweist sich als vorteilhaft, weil damit die Messmittel nicht in der direkten Zuordnung zur Produktionsstraße so konstruiert werden müssen, dass damit alle Typen von Hinterachsen messbar sind. Die Anpassung an den jeweiligen Hinterachstyp erfolgt bei dieser Ausgestaltung vorteilhaft im Wechselrahmen.

Ein Ausführungsbeispiel der Erfindung ist in der Zeichnung dargestellt. Die Figur zeigt ein Portalsystem 1 in einer Produktionsstraße für ein Kraftfahrzeug. An dem Portalsystem 1 erfolgt eine Messung und Einstellung der Parameter der Fahrwerkgeometrie an der Hinterachse des Fahrzeugs.

Die Hinterachsen werden in der Produktionsstraße gefördert, indem die Hinterachsen auf einer Palette aufliegen, die in der Produktionsstraße bewegt wird. (Pfeilrichtung 10).

An dem Portalsystem 1 sollen die Parameter der Fahrwerkgeometrie an der Hinterachse des Fahrzeugs eingestellt werden.

Hierzu sind Wechselrahmen 2, 3 vorgesehen. Jeder dieser Wechselrahmen 2, 3 ist an die Hinterachse eines Fahrzeugtyps angepasst.

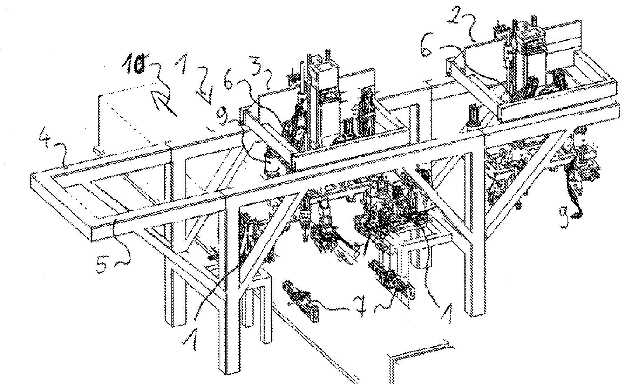

Wenn in der Produktionsstraße eine Hinterachse eines bestimmten Fahrzeugtyps an das Portalsystem 1 transportiert wird, wird der zugehörige Wechselrahmen 2, 3 an die entsprechende Position des Portalsystems 1 positioniert, die sich in der Produktionsstraße befindet. In der Darstellung der Figur 1 befindet sich der Wechselrahmen 3 in dieser Position.

Es sind Positioniermittel vorhanden, mit denen die Wechselrahmen 2, 3 entlang der Träger 4, 5 des Portalsystems 1 bewegt werden können. Wird eine Hinterachse eines Fahrzeugtyps in der Produktionsstraße zu dem Portalsystem 1 transportiert, der der Wechselrahmen 2 zugeordnet ist, wird der Wechselrahmen 3 zu der Seite der Träger 4, 5 verschoben, an dem sich in der Darstellung der Figur 1 kein Wechselrahmen befindet. Dadurch wird der Platz in dem Portalsystem frei, so dass der Wechselrahmen 2 entlang der Träger 4, 5 des Portalsystems 1 an die Position geschoben werden kann, in der mittels dieses Wechselrahmens die Hinterachse des Fahrzeugs gegriffen und gehalten werden kann.

Wie in der Beschreibungseinleitung erörtert gibt es unterschiedliche Möglichkeiten, die Einstellung der Parameter der Fahrwerkgeometrie an der Hinterachse vorzunehmen. Die Einstellwerkzeuge können - wie bisher bekannt - an der Produktionsstraße angeordnet sein, so dass diese - mit entsprechenden Verstellpositionen zur Anpassung an unterschiedliche Hinterachsen - benutzt werden können. Es ist auch möglich, an den Wechselrahmen standardisierte Schnittstellen für den Angriff von Stellelementen von außen vorzusehen. Diese Stellelemente greifen an standardisierten Schnittstellen der Wechselrahmen an, um darüber die Einstellwerkzeuge zu betätigen, die in die Wechselrahmen integriert und damit diesen Wechselrahmen zugeordnet sind. Die Einstellwerkzeuge müssen dann nicht insgesamt in deren direkter Zuordnung zur Produktionsstraße an die einzelnen Hinterachsen angepasst werden. Die konstruktive Anpassung der Einstellwerkzeuge an die jeweilige Hinterachse erfolgt im Wechselrahmen. Über die standardisierten Schnittstellen der Wechselrahmen können diese Einstellwerkzeuge in konstruktiv einfacher weise über die Stellmittel für die Einstellwerkzeuge betätigt werden. Diese Stellmittel sind direkt der Produktionsstraße zugeordnet. Da die Stellmittel und die Einstellwerkzeuge zusammenwirken, sind dadurch die Einstellwerkzeuge lediglich teilweise dem Wechselrahmen zugeordnet. Dadurch wird es in einfacher Weise möglich, auch neue Hiinterachsen einfach in den Produktionsprozess zu integrieren, weil die Anpassungen an neue Hinterachsen erfolgt, indem ein neuer Wechselrahmen in der Produktionsstraße ergänzt wird, der "zur Produktionsstraße hin" wiederum die standardisierten Schnittstellen aufweist. Dies gilt ebenso, wenn die Einstellwerkzeuge für die Parameter der Fahrwerkgeometrie vollständig in die Wechselrahmen integriert sind. Dem Wechselrahmen werden Daten zugeführt, über die die Einstellwerkzeuge so angesteuert werden, dass die entsprechenden Parameter der Fahrwerkgeometrie eingestellt werden.

In der Darstellung der Figur sind Radnabengreifeinheiten 1 als Bestandteil der Lagerungsmittel der Hinterachse der Produktionsstraße zugeordnet. Die optischen Messmittel sind in dieser Ausgestaltung ebenfalls als konstruktiver Bestandteil der Radnabengreifeinheit 1 der Produktionsstraße zugeordnet.

Als Einstellwerkzeuge sind Spurgeräte 7 vorhanden. Statt dieser Spurgeräte 7 können als Einstellwerkzeuge für den Spurwinkel auch Einstelleinheiten "Hold & Drive" vorgesehen sein (Bezugsziffer 8).

In die jeweiligen Wechseleinheiten 2 und 3 sind Federlasteinheiten 6 integriert, die in den einzelnen Wechselrahmen 2, 3 jeweils an den Hinterachstyp angepasst sind.

Außerdem sind in die Wechselrahmen 2, 3 noch Achsspanner 9 integriert, die mit den Radnabengreifeinheiten 1 zusammenwirken und die Lagerungsmittel für die Hinterachse bilden.

## Patentansprüche

1. Produktionsstraße für ein Kraftfahrzeug mit einer Vorrichtung zur Vermessung und Einstellung der Parameter der Fahrwerkgeometrie an einer Hinterachse eines Kraftfahrzeugs in der Produktionsstraße, mit der Produktionsstraße zugeordneten Lagerungsmitteln (1, 9) für die Hinterachse, mit der Produktionsstraße zugeordneten Belastungsmitteln (6) für die Hinterachse, mit der Produktionsstraße zugeordneten Messmitteln für die Parameter der Fahrwerkgeometrie sowie mit der Produktionsstraße zugeordneten Einstellwerkzeugen (7, 8) für die Einstellung der Parameter der Fahrwerkgeometrie,
**dadurch gekennzeichnet, dass** die Produktionsstraße eine Position aufweist zur Lagerung einer Hinterachse im Produktionsprozess, dass die Produktionsstraße mehrere Wechselrahmen (2, 3) aufweist, dass die Produktionsstraße Positioniermittel aufweist zur Positionierung eines der Wechselrahmen (3) in die Position zur Lagerung einer Hinterachse im Produktionsprozess (4, 5), wobei die Lagerungsmittel (1, 9) für die Hinterachse und / oder die Belastungsmittel (6) für die Hinterachse und /oder die Messmittel für die Parameter der Fahrwerkgeometrie und / oder die Einstellwerkzeuge (7, 8) für die Einstellung der Parameter der Fahrwerkgeometrie zumindest teilweise Bestandteil des jeweiligen Wechselrahmen (2, 3) sind.

2. Produktionsstraße nach Anspruch 1,
**dadurch gekennzeichnet, dass** der jeweilige Wechselrahmen (2, 3) Einstellwerkzeuge aufweist, zur Einstellung der Parameter der Fahrwerkgeometrie der Hinterachse.

3. Produktionsstraße nach Anspruch 2,
**dadurch gekennzeichnet, dass** die Einstellwerkzeuge des jeweiligen Wechselrahmens (2, 3) mittels Stellelementen betätigbar sind, die von außen auf den Wechselrahmen einwirken.

4. Produktionsstraße nach Anspruch 2,
**dadurch gekennzeichnet, dass** der Wechselrahmen (2, 3) eine Datenempfangseinheit aufweist, über die dem Wechselrahmen (2, 3) Informationen über die einzustellenden Parameter der Fahrwerkgeometrie übermittelbar sind.

5. Produktionsstraße nach Anspruch 2, 3 oder 4,
**dadurch gekennzeichnet, dass** der Wechselrahmen (2, 3) Lagerungsmittel für die Hinterachse aufweist, mit denen die Hinterachse an den Radnaben und/oder den Bremsscheiben und/oder Adapterscheiben greifbar ist, wobei die Lagerungsmittel Stellelemente aufweisen, mit denen die Orientierung der Radnabe und/ oder der Bremsscheiben und/oder der Adapterscheiben entsprechend den Parametern der Fahrwerkgeometrie einstellbar ist durch eine entsprechende Einstellung der Orientierung der Lagerungsmittel bei gelösten Feststellmitteln der Einstellung der Parameter der Fahrwerkgeometrie an der Hinterachse.

6. Produktionsstraße nach einem der Ansprüche 1 bis 5,
**dadurch gekennzeichnet, dass** die Produktionsstraße Führungsmittel (4, 5) aufweist zur geführten Bewegung der Wechselrahmen (2, 3) in der horizontalen Ebene in einer Richtung senkrecht zur Bewegungsrichtung (10) der Förderung der Hinterachsen in der Produktionsstraße.

7. Produktionsstraße nach einem der Ansprüche 1 bis 6,
**dadurch gekennzeichnet, dass** der Wechselrahmen (2, 3) weiterhin Messmittel aufweist zur Messung der Montagelage eines Hinterachsdifferentials.

## Claims

1. Production line for a motor vehicle with a device for measuring and adjusting the parameters of the chassis geometry at a rear axle of a motor vehicle in the production line, comprising bearing means (1, 9) for the rear axle which are assigned to the production line, comprising loading means (6) for the rear axle which are assigned to the production line, comprising measuring means for the parameters of the chassis geometry which are assigned to the production line, and comprising adjustment tools (7, 8), assigned to the production line, for adjusting the parameters of the chassis geometry,
**characterised in that** the production line comprises a position for bearing a rear axle in the production process, **in that** the production line comprises a plurality of interchangeable frames (2, 3), **in that** the production line comprises positioning means for positioning one of the interchangeable frames (3) in the position for bearing a rear axle, in the production process (4, 5), wherein the bearing means (1, 9) for the rear axle, and/or the loading means (6) for the rear axle, and/or the measuring means for the parameters of the chassis geometry, and/or the adjustment tools (7, 8) for adjusting the parameters of the chassis geometry are a component of the relevant interchangeable frame (2, 3), at least in part.

2. Production line according to claim 1,
**characterised in that** each interchangeable frame (2, 3) comprises adjustment tools for adjusting the parameters of the chassis geometry of the rear axle.

3. Production line according to claim 2,
**characterised in that** the adjustment tools of the relevant interchangeable frame (2, 3) are operable by means of actuating elements which act on the interchangeable frame from the outside.

4. Production line according to claim 2,
**characterised in that** the interchangeable frame (2, 3) comprises a data reception unit, by means of which information relating to the parameters of the chassis geometry to be adjusted can be transmitted to the interchangeable frame (2, 3).

5. Production line according to any of claims 2, 3 or 4,
**characterised in that** the interchangeable frame (2, 3) comprises bearing means for the rear axle, by means of which the rear axle can be gripped at the wheel hubs and/or the brake discs and/or adapter discs, wherein the bearing means comprise actuating elements, by means of which the orientation of the wheel hub and/or of the brake disc and/or of the adapter disc can be adjusted according to the parameters of the chassis geometry by means of a corresponding adjustment of the orientation of the bearing means, when the locking means for the adjustment of the parameters of the chassis geometry at the rear axle are released.

6. Production line according to any of claims 1 to 5,
**characterised in that** the production line comprises guide means (4, 5) for guided movement of the interchangeable frame (2, 3) in the horizontal plane, in a direction perpendicular to the movement direction (10) of the transportation of the rear axle in the production line.

7. Production line according to any of claims 1 to 6,
**characterised in that** the interchangeable frame (2, 3) further comprises measuring means for measuring the mounting position of a rear axle differential.

## Revendications

1. Ligne de production pour un véhicule automobile avec un dispositif pour mesurer et régler les paramètres de la géométrie du châssis sur un essieu arrière d'un véhicule automobile dans la ligne de production, avec des moyens de support (1, 9) associés à la ligne de production pour l'essieu arrière, avec des moyens de sollicitation (6) associés à la ligne de production pour l'essieu arrière, avec des moyens de mesure associés à la ligne de production pour les paramètres de la géométrie du châssis ainsi qu'avec des outils de réglage (7, 8) associés à la ligne de production pour le réglage des paramètres de la géométrie du châssis,
**caractérisée, en ce que** la ligne de production présente une position pour le support d'un essieu arrière dans le processus de production, **en ce que** la ligne de production présente plusieurs cadres interchangeables (2, 3), **en ce que** la ligne de production présente des moyens de positionnement pour positionner l'un des cadres interchangeables (3) dans la position pour le support d'un essieu arrière dans le processus de production (4, 5), les moyens de support (1, 9) pour l'essieu arrière et/ou les moyens de sollicitation (6) pour l'essieu arrière et/ou les moyens de mesure pour les paramètres de la géométrie du châssis et/ou les outils de réglage (7, 8) pour le réglage des paramètres de la géométrie du châssis faisant au moins partiellement partie du cadre interchangeable (2, 3) correspondant.

2. Ligne de production selon la revendication 1,
**caractérisée en ce que** chaque cadre interchangeable (2, 3) est muni d'outils de réglage pour le réglage des paramètres de la géométrie du châssis de l'essieu arrière.

3. Ligne de production selon la revendication 2,
**caractérisée en ce que** les outils de réglage de chaque cadre interchangeable (2, 3) peuvent être actionnés au moyen d'éléments de réglage qui agissent de l'extérieur sur le cadre interchangeable.

4. Ligne de production selon la revendication 2,
**caractérisée en ce que** le cadre interchangeable (2, 3) est muni d'une unité de réception de données par laquelle des informations sur les paramètres à régler de la géométrie du châssis peuvent être transmises au cadre interchangeable (2, 3).

5. Ligne de production selon la revendication 2, 3 ou 4,
**caractérisée en ce que** le cadre interchangeable (2, 3) est muni de moyens de support pour l'essieu arrière, avec lesquels l'essieu arrière peut être saisi au niveau des moyeux de roue et/ou des disques de frein et/ou de disques d'adaptation, les moyens de support étant munis d'éléments de réglage avec lesquels l'orientation du moyeu de roue et/ou des disques de frein et/ou des disques d'adaptation peut être réglée en fonction des paramètres de la géométrie du châssis par un réglage correspondant de l'orientation des moyens de support lorsque les moyens de fixation du réglage des paramètres de la géométrie du châssis sur l'essieu arrière sont desserrés.

6. Ligne de production selon l'une des revendications 1 à 5,
**caractérisée en ce que** la ligne de production est munie de moyens de guidage (4, 5) pour le déplacement guidé des cadres interchangeables (2, 3) dans le plan horizontal dans une direction perpendiculaire à la direction de déplacement (10) du convoyage des essieux arrière dans la ligne de production.

7. Ligne de production selon l'une des revendications 1 à 6,
**caractérisée en ce que** le cadre interchangeable (2, 3) est muni en outre de moyens de mesure pour mesurer la position de montage d'un différentiel d'essieu arrière.
